# EUROPÄISCHE PATENTANMELDUNG

(11) **EP 2 159 695 A2**
(43) Veröffentlichungstag der Anmeldung: **03.03.2010**
(21) Anmeldenummer: 09010696.4
(22) Anmeldetag: 20.08.2009
(51) Int. Cl.: G06F 11/273

(54) **Prüfsystem**

(30) Priorität: 22.08.2008 DE 102008039380
(71) Anmelder: IT-Designers GmbH, 73730 Esslingen (DE)
(72) Erfinder: Bühler, Oliver, 73266 Bissingen/Teck (DE); Ulmer, Daniel, 71083 Herrenberg (DE)
(74) Vertreter: Ruckh, Rainer Gerhard

(57) **Zusammenfassung**

Die Erfindung betrifft ein Prüfsystem (1) und umfasst eine Speichereinheit (11) in welcher Kenngrößen abspeicherbar sind. Mittels der Kenngrößen sind die Software- und Hardware-Spezifikation eines Prüfstands (2) beschrieben. Weiterhin sind Überprüfungsmittel zur Überprüfung der Software- und Hardware-Spezifikation wenigstens eines weiteren Prüfstands (2) vorgesehen. Mit diesen ist der Grad der Übereinstimmung der Software- und Hardware-Spezifikation des weiteren Prüfstands (2) mit den in der Rechnereinheit (12) gespeicherten Kenngrößen feststellbar.

## Beschreibung

Die Erfindung betrifft ein Prüfsystem.

Bei technisch komplexen Systemen wie zum Beispiel Prozesssteuerungen für Förderanlagen, Paketsortieranlagen und dergleichen sind bereits im Entwicklungsstadium und insbesondere auch in der Prototypenphase oder in der Vorserie umfangreiche Funktionstests des jeweiligen Zielsystems erforderlich.

Zur Durchführung derartiger Funktionstests werden generell Prüfstände eingesetzt, wobei der Begriff Prüfstand im Folgenden jegliche Einrichtung zu einer derartigen Durchführung von Funktionstests eines Zielsystems umfassen soll. Dabei erfolgt bei einem derartigen Prüfstand, möglichst unter Realbedingungen, eine Simulation spezifischer Funktionen des Zielsystems. Zur Durchführung derartiger Simulationen wird eine geeignete Simulationssoftware, eine Softwareumgebung zur Einbindung von zu prüfenden Komponenten des Zielsystems und eine hierfür geeignete Hardwareumgebung benötigt.

Bei der Funktionsprüfung komplexer Zielsysteme ist die Software- und Hardware-Struktur des Prüfstands entsprechend komplex ausgebildet und an das jeweilige Zielsystem angepasst.

Ein wesentliches Problem ist die Rückverfolgbarkeit derartiger Systeme. Durch sich ändernde Versionen, sowie Änderungen hinsichtlich des Funktionsumfangs und der Fertigungsstruktur eines Zielsystems ändert sich im Laufe der Zeit auch die hierfür vorgesehenen Prüfstände. Weiterhin werden auch bereits durch Abkündigungen von Software- und Hardware-Produkten zwangsläufig im Lauf der Zeit Änderungen im Aufbau der Prüfstände erforderlich.

Beispielsweise im Fehlerfall eines im Produktionsbetrieb eingesetzten Zielsystems kann es erforderlich sein, eine Jahre zuvor mit einem Prüfstand durchgeführte Prüfung zu wiederholen. Dies kann beispielsweise notwendig sein, um bei einem Fehlerfall haftungstechnische Fragen zu klären. Wenn der Prüfstand in seinem damaligen Aufbau nicht mehr existiert, ist eine reproduzierbare Wiederholung nicht mehr möglich, da selbst dann, wenn die Konstruktionsunterlagen des Prüfstands noch vorhanden sind, dessen exakter Nachbau nicht mehr möglich ist, da typischerweise wesentliche Software- und Hardware-Produkte nicht mehr erhältlich sind. Oft ist es sogar so, dass die Konstruktionsunterlagen nur unvollständige Informationen über Aufbau und Funktionalität des Prüfstands enthalten, so dass bereits deshalb ein Nachbau eines alten Prüfstands oder dessen Vergleich mit einem jüngeren Prüfstand nicht möglich ist.

Der Erfindung liegt die Aufgabe zugrunde, ein Prüfsystem bereitzustellen, mittels dessen eine Rückverfolgbarkeit von Prüfständen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Prüfsystem umfasst eine Speichereinheit in welcher Kenngrößen abspeicherbar sind. Mittels der Kenngrößen sind die Software-und Hardware-Spezifikation eines Prüfstands beschrieben. Weiterhin sind Überprüfungsmittel zur Überprüfung der Software- und Hardware-Spezifikation wenigstens eines weiteren Prüfstands vorgesehen. Mit diesen ist der Grad der Übereinstimmung der Software- und Hardware-Spezifikation des weiteren Prüfstands mit den in der Rechnereinheit gespeicherten Kenngrößen feststellbar.

Dadurch, dass die kompletten Hardware- und Software-Spezifikationen von Prüfständen als Kenngrößen, vorzugsweise in Form einer einzigen Kenngrößendatei abgespeichert sind, ist eine komplette Rückverfolgbarkeit der Prüfstände gewährleistet. Insbesondere kann anhand der gespeicherten Kenngrößen ein bestimmter Status eines Prüfstands zu einem bestimmten Entwicklungszeitpunkt exakt definiert und mit weiteren Prüfständen verglichen werden. Schließlich ist es möglich, durch Rückgriff auf eine durch die Kenngrößen definierte Hardware- und Software-Spezifikation, diesen Prüfstand auch noch nach Jahren wieder definiert nachzubilden.

Besonders vorteilhaft ist in den Prüfständen eine Treibersoftware integriert, die neben ihren Grundfunktionen, Anfragen an das zu prüfende Zielsystem auszugeben und Antworten vom Zielsystem hierauf zu empfangen, die Generierung der Kenngrößendatei übereinstimmt. Die Generierung der Kenngrößendatei erfolgt somit vorort im Prüfstand, das heißt ohne Einsatz externer Einheiten.

Die Speicherung der Kenngrößendatei erfolgt dagegen auf einer externen Einheit, insbesondere einer Rechnereinheit. Weiterhin übernimmt die Treibersoftware eines Prüfstands auch die Aufgabe eines Überprüfungsmittels derart, dass zum Abgleich der Hardware- und Software-Spezifikation dieses Prüfstands diese mit einer in der Rechnereinheit gespeicherten Kenngrößendatei verglichen wird.

Durch diesen Vergleich kann in der Treibersoftware ermittelt werden, ob die Hardware- und Software-Spezifikation des Prüfstands mit der durch die Kenngrößendatei definierten Hardware- und Software-Spezifikation eines anderen Prüfstands übereinstimmt.

Besonders vorteilhaft erfolgt der Vergleich derart, dass eine Beurteilung möglich ist, ob die zu vergleichenden Prüfstände identisch sind, falls nein, ob sie wenigstens funktionsgleich sind, oder falls nein, wo funktionelle Abweichungen vorhanden sind.

Ein derartiger Vergleich ist insbesondere dann von großem Vorteil, wenn anhand der gespeicherten Kenngrößendateien ein früherer Prüfstand nachgebildet werden soll. Eine identische Nachbildung liegt dann vor, wenn die Software-und Hardware-Komponenten nicht nur dieselbe Funktionen erfüllen, sondern auch noch identisch ausgebildet sind.

Insbesondere dann, wenn ein Prüfstandaufbau nachgebildet werden soll, der bereits mehrere Jahre alt ist, ist es wahrscheinlich, dass nicht mehr sämtliche Software- und Hardware-Komponenten, die im alten Prüfstand verwendet wurden, für den neuen Prüfstand zur Verfügung stehen. In diesem Fall besteht ein wesentlicher Vorteil des erfindungsgemäßen Prüfsystems darin, dass anhand der Kenngrößendatei ein selbsttätiger Vergleich der Funktionen der aus unterschiedlichen Software- und Hardware-Komponenten durchgeführt werden kann um dann als Ausgabegröße entweder die Übereinstimmung oder Nichtübereinstimmung der Funktionen ausgegeben wird. Im ersten Fall, wird durch den Abgleich anhand der Kenngrößendatei im Prüfsystem die Freigabe erteilt, dass mit beiden Prüfständen der gleiche Prüfumfang gewährleistet ist. Im zweiten Fall werden als Ausgabegrößen vorzugsweise die funktionellen Abweichungen so spezifiziert, dass durch gezielten Austausch von im neuen Prüfstand verwendeten Komponenten die funktionelle Übereinstimmung mit dem alten Prüfstand wieder hergestellt werden kann.

Die Erfindung wird im Folgenden anhand der Zeichnungen erläutert. Es zeigen:
- Figur 1:: Darstellung eines Prüfsystems mit einem ersten Prüfstand bei Abspeichern einer dem Prüfsystem kennzeichnenden Kenngrö- ßendatei in einer Speichereinheit.
- Figur 2:: Darstellung eines Prüfsystems mit einem zweiten Prüfstand bei Auslesen der Kenngrößendatei des ersten Prüfstands gemäß Fi- gur 1.

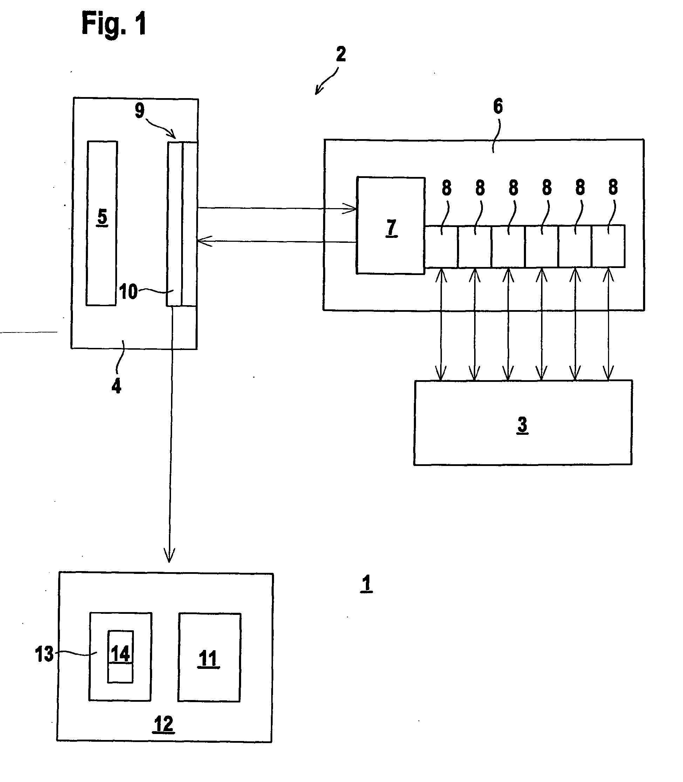

Figur 1 zeigt schematisch den Aufbau des erfindungsgemäßen Prüfsystems 1. Das Prüfsystem 1 umfasst einen Prüfstand 2, der zur Funktionsprüfung eines Zielsystems 3 dient. Der Prüfstand 2 kann insbesondere als Hardware-in-theloop-System zur Testung von Regelprozessen ausgebildet sein. Das Zielsystem 3 kann von einer Prozesssteuerung gebildet sein. Das Zielsystem 3 umfasst generell eine Ziel-Hardware und eine darauf installierte Ziel-Software.

Der Prüfstand 2 gemäß Figur 1 umfasst einen Rechner in Form eines Personalcomputers (PC) 4. Auf diesem ist eine Simulationssoftware, im Folgenden Simulationsmodul 5 genannt, installiert, welche zur Funktionsprüfung des Zielsystems 3 dient. Das Simulationsmodul 5 besteht aus einer Vielzahl von Softwaremodulen.

Der Prüfstand 2 umfasst weiterhin einen Realzeitadapter 6. Der Realzeitadapter 6 bildet im vorliegenden Fall ein nach dem Master-Slave-Prinzip arbeitendes System mit einem Master in Form eines Microprozessors 7 oder dergleichen und mit Slaves in Form von I/O-Systemen 8, die von CAN-Bussen, LIN-Bussen oder dergleichen gebildet sein können und welche die Verbindungen zum Zielsystem 3 herstellen. Über eine Treibersoftware 9 erfolgt ein bidirektionaler Datenaustausch zwischen dem Simulationsmodul 5 und dem Realzeitadapter 6.

Während der Umfang der Simulation durch das Simulationsmodul 5 vorgegeben wird, wird das Zeitverhalten der Simulation durch den Realzeitadapter 6 festgelegt, indem mittels einer in dem Realzeitadapter 6 vorhandenen Zeitbasis vom Zielsystem 3 eingelesene Signale mit Zeitstempeln versehen und mit diesen in das Simulationsmodul 5 eingegeben werden, und in dem Simulationsmodul 5 generierte Signale zu im Simulationsmodul 5 definierten Sollzeiten von dem Realzeitadapter 6 dem Zielsystem 3 zugeführt werden. Die hierfür im Realzeitadapter 6 vorhandene Zeitbasis kann eine lokale Zeitbasis sein, die beispielsweise durch einen Taktgeber im Realzeitadapter 6 vorgegeben wird. Besonders vorteilhaft weist der Realzeitadapter 6 eine absolute Zeitbasis auf, so dass im Realzeitadapter 6 Signale, die aus dem Zielsystem 3 eingelesen werden, mit absoluten Zeitstempeln versehen werden. Zweckmäßigerweise weist der Realzeitadapter 6 hierzu eine nicht dargestellte Schnittstelle zum Einlesen absoluter Zeitsignale, insbesondere GPS-Signale, auf.

Durch den Einsatz des Realzeitadapters 6 kann das Zielsystem 3 mit der originalen Zielhard- und -software getestet werden.

Die Treibersoftware 9 des Prüfstands 2 beinhaltet ein API-(application programmable interface)-Modul 10, mittels dessen selbsttätig eine Kenngrößendatei bestehend aus Kenngrößen, welche die komplette Software- und Hardware-Spezifikation des Prüfstands 2 beschreiben, generiert wird. Die Kenngrößendatei ist im vorliegenden Fall als XML-Datei ausgebildet. Generell sind natürlich auch andere Dateiformate möglich. Die im API-Modul 10 generierten Kenngrößen umfassen in mehreren Informationsebenen gegliederte Informationen über die Software- und Hardware-Komponenten des Prüfstands 2.

Im Fall der Software-Komponenten sind diese beispielsweise Informationen darüber, ob es sich bei Software-Modulen um Standard- oder Spezialmodule handelt. Weiterhin sind Versionen der Software-Module sowie Informationen über den Funktionsumfang der Software-Module als Kenngrößen enthalten.

Im Fall der Hardware-Komponenten zählen zu den Informationen Angaben über Hersteller, Versionsnummern und Herstelldaten. Weiterhin gehören auch Informationen über die Funktionen von Hardware-Komponenten zu den Kenngrößen, beispielsweise für die Slaves des Prüfstands 2 Informationen darüber, an welche Einheiten diese anschließbar sind.

Eine derartige den Prüfstand 2 kennzeichnende Kenngrößendatei, die im API-Modul 10 generiert wird, wird in einer externen Speichereinheit 11, die Bestandteil einer Rechnereinheit 12 ist, abgelegt. Die Rechnereinheit 12 weist weiterhin einen Prozessor 13 auf, auf welchem unter anderem ein Konfigurations-Management-System 14 implementiert ist. In dem Konfigurations-Management-System 14 kann die Software des Prüfstands 2 in einer kompletten Versionsverwaltung hinterlegt werden. Durch die Speicherung der Kenngrößendatei ist die komplette Software- und Hardware-Spezifikation des Prüfstands 2 in der Speichereinheit 11 hinterlegt. Generell können mehrere derartige Kenngrößendateien für verschiedene Prüfstände 2 in der Speichereinheit 11 hinterlegt sein.

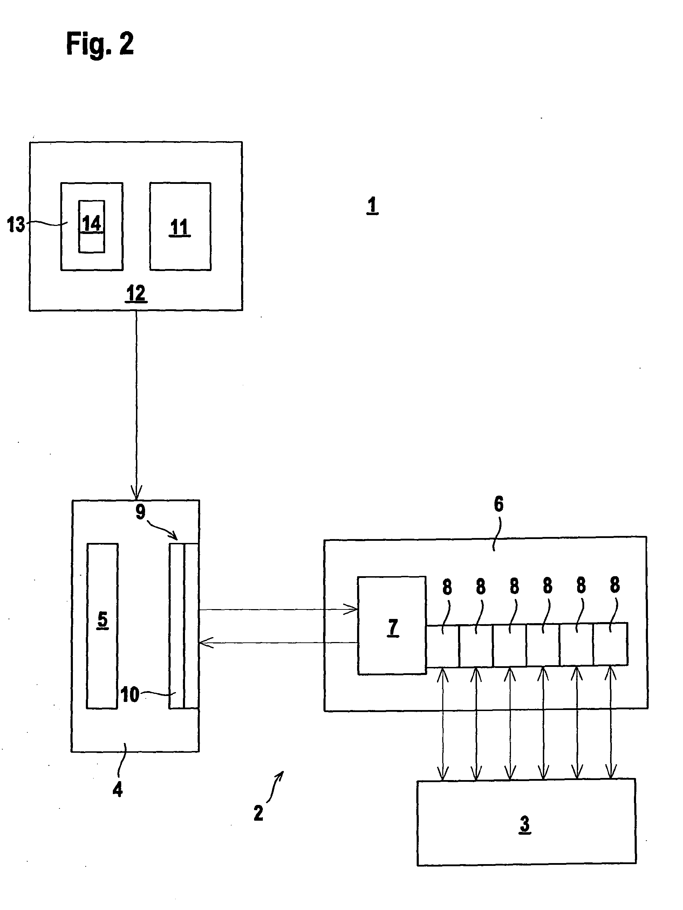

Figur 2 zeigt ein weiteres Prüfsystem 1, wobei dieses die Rechnereinheit 12 gemäß Figur 1 aufweist. Dafür ist in der Speichereinheit 11 die Kenngrößendatei gespeichert, die der Software- und Hardware-Konfiguration des Prüfstands 2 gemäß Figur 1 entspricht.

Figur 2 zeigt weiterhin einen Prüfstand 2, der hinsichtlich eines strukturellen Aufbaus dem Prüfstand 2 gemäß Figur 1 entspricht. Der Prüfstand 2 gemäß Figur 2 soll dabei dahingehend geprüft werden, inwieweit dieser dem Prüfstand 2 gemäß Figur 1 entspricht.

Hierzu wird, wie in Figur 2 schematisch dargestellt, die Kenngrößendatei aus der Speichereinheit 11 ausgelesen und dem API-Modul 10 des Prüfstands 2 gemäß Figur 2 zur Verfügung gestellt.

Dieses API-Modul 10 bildet ein Überprüfungsmittel derart, dass anhand der Kenngrößendatei selbsttätig geprüft wird, ob die Software- und Hardware-Konfiguration des Prüfstands 2 gemäß Figur 1 mit jener des Prüfstands 2 gemäß Figur 2 identisch oder funktionsgleich ist.

Eine Identität liegt dann vor, wenn für beide Prüfstände 2 exakt dieselben Software- und Hardware-Komponenten verwendet werden. Dies kann durch Abgleich von in der Kenngrößendatei enthaltenden Produktdaten leicht durchgeführt werden.

Da die Kenngrößendatei auch Informationen über die Funktionalitäten der Software- und Hardware-Komponenten enthält, kann mit dem API-Modul 10 des Prüfstands 2 gemäß Figur 2 auch festgestellt werden, ob bei Einsatz von Software- und Hardware-Komponenten, die nicht baugleich mit den in der Kenngrößendatei enthaltenen Komponenten sind, dennoch eine Funktionsgleichheit gegeben ist.

Falls dies der Fall ist, wird dies vom API-Modul 10 als Ausgabegröße ausgegeben. Falls dies nicht der Fall ist, werden bevorzugt die Software- und Hardware-Komponenten, für welche funktionelle Abweichungen vorliegen, ausgegeben. Anhand derer kann der Benutzer diese durch andere Komponenten ersetzen um so die gewünschte Funktionsgleichheit des Prüfstands 2 gemäß Figur 2 mit dem in der Kenngrößendatei definierten Prüfstand 2 herzustellen.

Schließlich kann durch Verwendung des Konfigurations-Management-Systems die Software-Konfiguration des Prüfstands 2, insbesondere des Master-Slave-Systems des Prüfstands 2, selbsttätig erstellt werden.

Das Konfigurations-Management-System enthält hierzu sämtliche für den Aufbau der Prüfstand-Software notwendigen Informationen, insbesondere die Auflistung und Verknüpfung der einzelnen Software-Module des Prüfstands 2.

### Bezugszeichenliste

- (1): Prüfsystem
- (2): Prüfstand
- (3): Zielsystem
- (4): Personalcomputer
- (5): Simulationsmodul
- (6): Realzeitadapter
- (7): Microprozessor
- (8): I/O-System
- (9): Treibersoftware
- (10): API-Modul
- (11): Speichereinheit
- (12): Rechnereinheit
- (13): Prozessor
- (14): Konfigurations-Management-System

## Patentansprüche

1. Prüfsystem (1), mit einer Speichereinheit (11) in welcher Kenngrößen abspeicherbar sind, mittels derer die Software- und Hardware-Spezifikation eines Prüfstands (2) beschrieben sind, und mit Überprüfungsmitteln zur Überprüfung der Software- und Hardware-Spezifikation wenigstens eines weiteren Prüfstands (2), wobei mit diesen der Grad der Übereinstimmung der Software- und Hardware-Spezifikation des weiteren Prüfstands (2) mit den in der Rechnereinheit (12) gespeicherten Kenngrößen feststellbar ist.

2. Prüfsystem nach Anspruch 1, **dadurch gekennzeichnet, dass** die Kenngrößen in einer Kenngrößendatei gespeichert sind.

3. Prüfsystem nach Anspruch 2, **dadurch gekennzeichnet, dass** die Kenngrößendatei mittels einer Treibersoftware (9) generiert wird, die Bestandteil des Prüfstands (2) ist.

4. Prüfsystem nach einem der Ansprüche 1 bis 3, **dadurch gekennzeichnet, dass** die Überprüfungsmittel eine Treibersoftware (9) aufweisen.

5. Prüfsystem nach Anspruch 4, **dadurch gekennzeichnet, dass** die Treibersoftware (9) Bestandteil des weiteren Prüfstands (2) ist.

6. Prüfsystem nach Anspruch 5, **dadurch gekennzeichnet, dass** die Treibersoftware (9) des weiteren Prüfstands (2) funktionsgleich mit der Treibersoftware (9) des Prüfstands (2) ist.

7. Prüfsystem nach einem der Ansprüche 1 bis 6, **dadurch gekennzeichnet, dass** mit den Überprüfungsmitteln feststellbar ist, ob die Software- und Hardware-Spezifikationen des Prüfstands (2) und des weiteren Prüfstands (2) identisch oder funktionsgleich sind.

8. Prüfsystem nach Anspruch 7, **dadurch gekennzeichnet, dass** mit den Überprüfungsmitteln Abweichungen der Software- und Hardware-Spezifikationen des Prüfstands (2) und des weiteren Prüfstands (2) feststellbar und dokumentierbar sind.

9. Prüfsystem nach einem der Ansprüche 7 oder 8, **dadurch gekennzeichnet, dass** anhand der Kenngrößendatei mittels der Überprüfungsmittel die Software-Konfiguration für den weiteren Prüfstand (2) selbsttätig genierbar ist.

10. Prüfsystem nach Anspruch 9, **dadurch gekennzeichnet, dass** die Mittel zur Überprüfung ein Konfigurations-Management-System aufweisen.

11. Prüfsystem nach einem der Ansprüche 1 bis 10, **dadurch gekennzeichnet, dass** die Kenngrößen herstellerspezifische Informationen und Informationen über den Funktionsumfang der Software und Hardware enthalten.

12. Prüfsystem nach Anspruch 11, **dadurch gekennzeichnet, dass** die Kenngrößen in verschiedenen Ebenen strukturierte Informationen über die Soft- und Hardware enthalten.
